# EUROPEAN PATENT APPLICATION

(11) **EP 4 074 171 A1**
(43) Date of publication of application: **19.10.2022**
(21) Application number: 22168407.9
(22) Date of filing: 14.04.2022
(51) Int. Cl.: A01K 1/015

(54) **A SYSTEM FOR GATHERING EXCRETA OF PRODUCTION ANIMALS**

(30) Priority: 15.04.2021 NL 2027975
(71) Applicant: IM-aces BV, 5801 EG Venray (NL)
(72) Inventor: SNIP, Jacob Gerrit, 5631 KP Eindhoven (NL); HEEREN, Theodorus Antonius Gerardus, 5912 JB Venlo (NL)
(74) Representative: Janssen, Paulus J. P.

(57) **Abstract**

The invention pertains to a system for gathering excreta of production animals, the system comprising a confined space for keeping the production animals, the space comprising a floor for supporting the animals, wherein the floor comprises a perforated area to let the excreta of the animals pass through the floor onto a guiding track for guiding the excreta away from the confined space, the system further comprising a wiper to wipe remains of the excreta of the guiding track, wherein the guiding track has a volume, including its surface, that is made from a synthetic plastic material chosen from the group consisting of non-polar polyolefins and polyepoxides, and in that the wiper has a surface made from a non-porous, non-filled rubber.

## Description

### FIELD OF THE INVENTION

In general, the present invention pertains to a system for gathering excreta of production animals, the system comprising a confined space for keeping the production animals, the space comprising a floor for supporting the animals, wherein the floor comprises a perforated area (which includes a mere hole or large opening adjacent the actual area on which the animals are able to stand and walk) to let excreta of the animals, and optional cleaning water, pass through the floor onto a guiding track for guiding the excreta away from the confined space.

### BACKGROUND

The present invention relates to the removal of excreta (excrement), made up of faeces and urine, of production animals kept in a confined space such as a stall.

In wide use in practice, and therefore generally known, are stalls whose floor surface is constructed so as to be entirely or partially permeable by perforation to animal excreta, for example as a slatted floor, a liquid manure channel for the collection and common drainage of faeces and urine (mixed together as a slurry) being provided under the permeable floor. Typically, the liquid manure channel has a relatively large capacity, because it is used not only to collect but also to store faeces and urine. From time to time the liquid manure channel is emptied, whereby the liquid manure is then pumped either into a liquid manure container outside the stall or into a transport vehicle so that it can be applied on a field surface.

From US 2,920,753 a conveyor for cleaning poultry pits or the like is known providing a reciprocating conveyor for removing the litter from poultry pits or troughs. The conveyor comprises a pair of spaced track members adapted to be slideably supported at the sides of the pit, and a wiper or scraper device pivotally connected to said track members and depending therefrom into the pit, and stop means carried by said track members for limiting pivotal movement of said scraper device on the forward stroke of said conveyor to maintain said scraper device in engagement with the bottom of said pit. The device further comprises a lever structure pivotally carried by said scraper device at a location spaced from said pivotal connection of said scraper device and adapted frictionally to engage the bottom of said pit on the reverse stroke of said conveyor automatically to lift said scraper device above the bottom of said pit by rotation of said scraper device about its pivotal connection in a direction away from said stop means.

Another type of device is known from US 3,409,120. The described device comprises a pair of spaced support frames each of which has an end panel rotatably mounted thereon. Sections of the peripheries of the end panels are generally rounded and extend below the frames as the end panels are rotated with respect thereto. A wiper or scraper blade is mounted between the support frames and has its ends affixed to the end panels in such a manner that it may rotate with them. Stop means are provided on the support frames for limiting the arc through which the end panels may rotate. The final assembly is such that when the wiper is pulled forward, the rounded peripheries of the end panels engage the bottom of the pit and swing the blade into scraping position. When the device is retracted, the rounded peripheries of the end panel cause the wiper blade to swing upward to a nearly horizontal position and the wiper is carried solely by the rounded peripheries of the end panels.

Yet another type of device is known from US 4,320,008. Disclosed herein is an apparatus for moving solid material and liquid from a floor into a solid material tank and a liquid tank. The floor has longitudinal sections that slope downwardly to a longitudinal slit open to a chamber located below the floor. A wiper pivotally connected to a frame moves solid material from the floor into the solid material tank when the frame is moved toward the solid material tank. A vertical plate attached to the frame extends through the slit into the chamber. A plate pivotally attached to the vertical plate pushes liquid in the chamber into the liquid tank when the frame is moved toward the liquid tank. A winch and rope attached to a connecting fitting located in a mount on the frame selectively moves the frame in opposite directions over the floor. The fitting has limited movement relative to the frame and engages the wiper to raise the wiper above the floor when the frame is moved toward the liquid tank whereby solid material is not moved when the wiper is raised.

US 5,732,658 discloses a stable comprising a collection chamber for the excreta with a bottom below a stable floor, devised as an open grid. The bottom is covered by a bottom plate formed by parallel V-shaped gutters. The walls of the gutters form an angle with the horizontal, which is between 45 degrees and 80 degrees. At the underside the gutters have a radius of 7 to 12 cm. The excreta are collected in the V-shaped gutters, after which the bottom is flushed. The manure is discharged to a storage facility. After a certain settling time the manure has separated into a thick fraction and a thin fraction. The thin fraction is drawn off and is used to flush the bottom plate clean. A layer of the thin fraction remains standing on the bottom plate, so that the manure is collected therein.

A lot of emphasis has been put in the past on all kinds of special mechanical arrangements for making the wiping process of the guiding track for guiding the excreta of the production animals as efficient and durable as possible. However, in many cases the guiding tracks after some time get contaminated and more and more difficult to wipe clean, if possible at all.

### OBJECT OF THE INVENTION

It is an object of the invention to provide for an improved system to wipe production animal excreta form a guiding track.

### SUMMARY OF THE INVENTION

In order to meet the object of the invention, a system as described here above has been devised, the system further comprising a wiper to wipe remains of the excreta of the guiding track, wherein the guiding track (which preferably is an in essence flat guiding track) has a surface made from a synthetic plastic material chosen from the group consisting of non-polar polyolefins and polyepoxides, and in that the wiper has a surface made from a non-porous, non-filled rubber. Surprisingly, it was found that when this particular combination of materials is chosen, the wiping action to wipe the surface of the guiding track clean can be very durable, i.e. can be maintained during numerous wiping actions without the surface getting contaminated with remains of faeces. The efficacy and durability of the system depends not only on the actual mechanical arrangement, but importantly, within a given arrangement depends largely on a delicate balance between the inherent physical properties of the guiding track and the wiper (stiffness, elasticity etc), the resistance to mechanical and chemical wear of both items, the hydrophilic properties of the material of the guiding track, the tendency of the material of the guiding track to bind faecal material, and also of the price of various materials. The exact reason why the found combination of materials fulfils this delicate balance, and other combinations of materials including polycarbonate, inox (stainless steel) and Teflon for the guiding track, and for example ABS rubber for the wiper do not, is not entirely clear, but must be due to the combined physical and chemical interaction between faeces, urine, the material of the surface of the guiding track and the (volume of the) wiper.

By arriving at the first step as indicated here above, the inventors realised that a robust system can now be devised since the type of materials that are essential to the above invention, viz. a synthetic plastic material chosen from the group consisting of non-polar polyolefins and polyepoxides, is generally also available as a bulk material instead of a coating only. Although with a coating, as for example used in many Teflon products, the essential surface properties can be provided, but due to wear the properties may not be durable and therefore not robust. By using the current materials the guiding track can be made as a so called self-supporting track (i.e. having stable macroscopic dimensions during use without needing a support on a scale less than 10 cm - 100 cm) wherein the volume (the bulk) of the guiding track (including its surface) is made of these materials, typically by constructing the tracks of a plate of the said materials or multiple consecutive plates of these material, the plates e.g. being welded or otherwise brought in a stable mechanical neighbouring connection. These plates may have a thickness between 2 mm and 20 cm, preferably between 3 mm and 30 mm, such as for example, 3, 4, 5, 6, 7, 8, 9, 10, 11, 12, 13, 14, 15, 16, 17, 18, 19, 20, 21, 22, 23, 24, 25, 26, 27, 28 or 29 mm). At the lower side of this range, more support is needed (for example every other 50 cm) to make sure the track remains flat during use. In any case, even a thin plate such as for example 2-3 mm, is opposed to a coating which is inherently not self-supporting as the carrier body is needed to support the coating on a scale below 10 cm. A coating typically has a thickness below 0.5 mm, such as for example 10-100 µm. By providing the volume of the track (thus including the surface) made from these materials, wear will have hardly any influence on the properties of the surface of the track.

The first step as indicated here above however, thus with at least a coating for the guiding track made of the now claimed materials, the system can be advantageously combined with a separate autonomous vehicle that incorporates the wiper, i.e. a so called robot wiper. In the art, a wiper is typically provided in a system of cables and/or rods (c.f. a wind shield wiper) for wiping the track back and force. However, this way the wiping action has hardly any freedom in operation: the path, wiping order etc. are completely predetermined by the system of cables and/or rods and cannot be easily changed during the wiping process. By using an autonomous vehicle, which vehicles as such are known in the art (see e.g. FR3042096), and provide it with a wiper, the wiping action has a significantly increase in freedom of operation. The autonomous vehicle does not need to be attached to any supports or guides and is able to autonomously cross the guiding track, without needing to follow the same route over and over again. For example, areas with higher load of excreta can be wiped more frequently than areas with less load. The wear of the surface will thus be less than when using a system with a fixed track such as when using cables. The routing could be completely preprogrammed based on typical animal behaviour as determined over time. Also, sensors could be used (either at the track, at the robot, or somewhere else) to measure various conditions of the surface and in the stables (such as for example solids presence, NH₃, CO₂, CH₄, N₂O, humidity, temperature, smoke etc.), as well as performance of the robot (local power consumed, local surface condition before and after wiping, etc) weight of the wiper (to assess whether it should be cleaned), and all kinds of other parameters that are relevant for the process. These data can be used i.a. to adjust the routing of the robot and possibly the wiping action during the process, cleaning or repair of the track and/or robot etc. This way, in fact implementing a so-called iterative learning control strategy, the routing can be permanently adjusted to adhere to the momentary desired needs of wiping the guide track. With such a robot wiper, even when using a mere coating with the current guiding track materials, a robust system can be devised. The data is advantageously logged for process optimisation and operator review and intervention at any desired time. It is noted that although advantageous when using a surface coating on the guiding track, a robot wiper can also be advantageously used in the system where also the volume of the guiding track is made of the materials of the present invention to optimize use of the wiper to remove the remains of the excreta, mostly solids, but also remains of urine, of the track.

The robot, if used may comprise an internal container with cleaning liquid, and/or other utensils besides the wiper. The cleaning liquid, which may be as simple a regular tap water, optionally comprising a soap or any other additive, may be used to clean the robot and is parts during the process or for example to locally clean the track if there is an obstruction that hinders the free movement of the robot. The container can be filled automatically when the robot is present at its charging position.

Regarding the rubber for use as a wiper material, although typical rubber wipers are made of porous rubber to increase their compliance to follow irregularities on a surface to be wiped, it was found that non porous materials are preferred to insure a long durability of an efficacious wiping action. Next to this, although one may expect that a filled rubber is preferred for durability reasons, it was found that a non-filled material is preferred for use as a rubber material for the wiper.

### DEFINITIONS

A *production animal* (also referred to as live-stock) is any animal that is kept to raise meat, fibre, protein, milk, eggs, wool, skin or other products for use by humans, as opposed to companion animals which are kept for primarily for a person's company, protection, or entertainment. The keeping of production animals includes day-to-day care, selective breeding, and the raising of animals. Typical production animals are porcine, bovine, ovine and caprine.

A *confined space* can be any closed or semi-closed area designed to restrict, and preferably prevent, the free movement of an animal to an area outside of the confined space, such as a farm, stable, paddock, fenced land etc.

An *angle with respect to the horizontal* means an angle with respect to the horizontal earth surface.

When a *second direction extends perpendicular to a first direction,* it extends at least to some extent perpendicularly to the first direction. In other words, the two directions do not run in parallel but they intersect, and thus form an angle between 0 and 90°. The angle preferably is between 45 and 90°, such as 45, 50, 55, 60, 65, 70, 75, 80, 81, 82, 83, 84, 85, 86, 87, 88, 89 or 90°.

A synthetic *plastic* material is any of numerous synthetic organic or processed materials that are mostly thermoplastic or thermosetting polymers of high molecular weight and that can be made into objects, films, or filaments.

A *non-porous non-filled* rubber is a rubber that has less than 2 volume %, preferably less than 1 volume %, less than 0.5 volume % or even no pore volume, and is not filled during manufacturing with a particulate material such as silica, fibres, minerals etc.

*LLDPE* is linear low-density polyethylene, i.e. a substantially linear polyethylene polymer, with significant numbers of short branches, commonly made by copolymerization of ethylene with longer-chain olefins. Linear low-density polyethylene differs structurally from conventional low-density polyethylene (LDPE) because of the absence of long chain branching.

*UHMWPE* is ultra-high-molecular-weight polyethylene, also known as high-modulus polyethylene, (HMPE). It has extremely long chains, with a molecular mass between 3.0 and 8.0 million amu.

PP is polypropylene, also known as polypropene, a thermoplastic polymer used in a wide variety of applications. It is produced via chain-growth polymerization from the monomer propylene.

A *rubber* material is a polymer material that can recover shape after being stretched or deformed. All rubbers materials are so called elastomers. One well-known natural rubber polymer is polyisoprene, or natural rubber from the sap of hevea trees in Central America.

*EPDM* rubber (ethylene propylene diene monomer rubber) is a synthetic M-Class rubber wherein the 'M' in M-Class refers to its classification in ASTM standard D-1418. The M class comprises elastomers having a saturated chain of the polyethylene type. EPDM is made from ethylene, propylene and a diene comonomer that enables crosslinking via sulphur vulcanisation systems.

### FURTHER EMBODIMENTS OF THE INVENTION

In a further embodiment of the invention the synthetic plastic material is chosen from the group consisting of a polyethylene and a polypropylene and the rubber is an EPDM rubber. Preferably, the synthetic plastic material is chosen from the group consisting of LLDPE, UHMWPE and PP. These materials have been found to be particularly suitable for use in the present invention.

In another embodiment of the system according to the invention the wiper is in essence completely made from the rubber. This embodiment does not exclude that the actual wiper is supported or carried by another part. The gist of this embodiment is that the wiper is not comprised of a mere coating of the claimed materials, but that the bulk of the wiper is made completely of the said material.

In yet another embodiment of the system according to the invention the wiper is positioned under a forward angle with respect to the wiping direction between 60 and 90°, preferably about 70°.

In still another embodiment the guiding track is slopingly positioned under an angle of less than 20° with the horizontal to allow the urine to flow under the influence of gravity in a first direction corresponding to the slope of the guiding track towards a first container, and in that the wiper is positioned to wipe the faeces in a second direction towards a second container, which second direction differs from the first direction. This embodiment mitigates the problem of significant environmental pollution, due to the formation and diffusion of ammonia and methane gas when faeces and urine are collected in one container. The gasses disadvantageously arise both in the stall during the collection and storing of the liquid manure and also in the surroundings of the liquid manure container, or in the surroundings of a field surface dunged with liquid manure. This may have an adverse effect on the health of the animals kept in the stall and the human operator in the stall. In particular, unpleasant odors arise that are felt by most of those affected to be strongly disturbing. In order to avoid damage to the animals kept in the stall, an intensive exchange of air is required, which takes place using ventilators, for which a considerable amount of electrical energy must be used. However, this intensive air exchange again results in an increased discharge of harmful gas outside the stall. The current embodiment may solve this problem almost entirely. By positioning the guiding tracks slopingly, the urine flows under the influence of gravity towards a first container, while the faeces remain on the surface of the guiding tracks such that the faeces and urine are separated before the beginning of natural decomposition. The faeces are wiped of the guiding track to the second container. The materials of the current invention appear to be particularly suitable for this system wherein faeces and urine are separated at a very early stage after excretion.

In a further embodiment the guiding track is positioned under an angle of less than 8° with respect to the horizontal. An angle of 8° is disclosed in US 6,698,383 as an optimized angle for a V shaped gutter. The angle of 8° is optimized such that urine and faeces are separated automatically to an adequate extent. Although the set up of the system as known from US 6,698,383 appears to work very well initially and provide for a very good separation between faeces and urine, it was applicant's recognition that the solution after substantial prolonged use has an important disadvantage. It was found that after a great number of times the guiding tracks are wiped, (solid) contamination builds up on the tracks and the wiper itself, making a good removal of the faeces increasingly difficult. Initially it was thought to increase the angle above 8° to makes sure any contaminating particles could more easily follow a path down into gutter when released by the wiper, but apart from the fact that this way the separation between the faeces and the urine was less adequate, the problem of contamination did not decrease. Surprisingly, when the angle was decreased below the optimized 8°, thus being less than 8° such as for example 7° or less (such as 6°, 5°, 4°, 3°, 2°, 1.5°, 1°, 0.5° or even as lows as 0.2° or 0.1°, the problem of contamination was less, or could even be completely prevented, while at the same time the separation of the faeces and urine was not substantially negatively influenced. After studying the surface of the guiding tracks in time while using various angles for the guiding track, the inventors found a possible explanation for improvement that resulted from this counterintuitive change of the angle below 8°. It appears that when the urine flows down from the guiding track too fast, there is an increased risk that the faeces dry to a too large extent and partially stick very hard to the surface of the guiding track and also, there is less urine present to act as a lubricant when the surface is wiped. The consequence is that each and every time the surface of the guiding track is wiped, small parts of the faeces remain stuck on the surface or get stuck on the wiper. Although not visible immediately, this will become visible after many wipings. A solution used in practice can be clean the surface of the guiding track and/or wiper manually after a large number of wipings. However, by lowering the angle below 8°, the problem is mitigated or can even be completely prevented, depending i.a. on the material of which the guiding track and/or the wiper is made, such that such manual cleanings can take care at a substantially lower frequency or can even be completely unnecessary.

In again another embodiment the system comprises a means to cool the guiding track. It was found that by cooling the guiding track, any decomposition reaction that could still occur between urine slowly finding its way down the track and faeces lying on the track could be decreased in order to even further reduce ammonia production or other unwanted products. The type of cooling means is not essential, whether by conduction, convection or radiation, as long as the temperature of the surface of the guiding track can be lowered. A very effective means could be the use of internal canals through which a cooling medium is transported.

In still again another embodiment the system comprises a means to wet the guiding track. In case the amount of urine on the guiding track is for some reason too low to induce an optimal and durable wiping action, the invention also foresees the application of a means to additionally wet the surface of the guiding track, for example by providing a sprinkler system to sprinkle water (or any other - aqueous - liquid) over the guiding track. Such means is particularly advantageous when the slope of the guiding track is less than 5°, in particular less than 3°, 2°, or 1°.

In yet another embodiment the perforated area of the floor is a heightened sub area of the floor. It was found that by proving the perforated area as a heightened area (for example heightened 15-40 cm above the main floor in the stable), some animals, in particular pigs, will preferentially use this area as a toilet area, instead of a lying and walking area. This may help to prevent or at least diminish the amount of excreta, and the concomitant disadvantages, on the floor of the main stable and induce maximum amount of excreta to arrive at the guiding track.

In another embodiment the perforated area of the floor comprises a longitudinal beam that protrudes from the perforated area. Such a beam has more or less the same effect as heightening the perforated area. By proving a beam on the area, the area is less attractive for lying down and walking, and at the same time, the beam was found, in particular for pigs, an attractive support to stand against when producing faeces. So the provision of such a beam may increase the amount of excreta arriving at the guiding track. This may also be combined with other measures to stimulate excreting at a particular site.

Again, in yet another embodiment the system comprises a means to cool the floor, i.e. at least that part of the floor on which the animals frequently lay down. Cooling of the floor is not only a means to increase animal welfare during times when the environmental temperature is high, it is also a means to decrease unwanted reaction between the urine and faeces that are excreted on the main part of the floor instead of the perforated area. As with the means to cool the surface of the guiding track, any conventional means can be used to cool the floor.

In another advantageous embodiment of the system according to the invention the floor is non porous. A non-porous floor has the advantage that faecal remains do not tend to stick to the floor, and urine will not draw into the floor, or at least to a lesser extent. This makes cleaning of the stables easier and increases animal welfare.

The invention is also embodied in a system for gathering excreta of production animals, the excreta comprising faeces and urine, the system comprising a confined space for keeping the production animals, the space comprising a floor for supporting the animals, wherein the floor comprises a perforated area to let excreta of the animals pass through the floor onto a guiding track for guiding the excreta away from the confined space, wherein the guiding track is slopingly positioned to allow the urine to flow under the influence of gravity in a first direction corresponding to the slope of the guiding track towards a first container, and wherein the system further comprises a wiper to wipe the faeces in a second direction differing from the first direction towards a second container, characterised in that the guiding track is slopingly positioned under an angle of less than 8° with the horizontal. It is noted that the above described features of the volume of the guiding track (including its surface) being made from a synthetic plastic material chosen from the group consisting of non-polar polyolefins and polyepoxides, and the robot wiper can also be advantageously combined with this embodiment of the invention, and thus also with any of the further embodiments as described directly here beneath.

Although the set-up of the system as known from US 6,698,383 appears to work very well initially and provide for a very good separation between faeces and urine, it was applicant's recognition that the solution after substantial prolonged use has an important disadvantage. It was found that after a great number of times the guiding tracks are wiped, (solid) contamination builds up on the tracks and the wiper itself, making a good removal of the faeces increasingly difficult. Initially it was thought to increase the angle above 8° to makes sure any contaminating particles could more easily follow a path down into gutter when released by the wiper, but apart from the fact that this way the separation between the faeces and the urine was less adequate, the problem of contamination did not decrease. Surprisingly, when the angle was decreased below the optimized 8°, thus being less than 8° such as for example 7° or less (such as 6°, 5°, 4°, 3°, 2°, 1.5°, 1°, 0.5° or even as lows as 0.2° or 0.1°, the problem of contamination was less, or could even be completely prevented, while at the same time the separation of the faeces and urine was not substantially negatively influenced. After studying the surface of the guiding tracks in time while using various angles for the guiding track, the inventors found a possible explanation for improvement that resulted from this counterintuitive change of the angle below 8°. It appears that when the urine flows down from the guiding track too fast, there is an increased risk that the faeces dry to a too large extent and partially stick very hard to the surface of the guiding track and also, there is less urine present to act as a lubricant when the surface is wiped. The consequence is that each and every time the surface of the guiding track is wiped, small parts of the faeces remain stuck on the surface or get stuck on the wiper. Although not visible immediately, this will become visible after many wiper actions. A solution used in practice can be clean the surface of the guiding track and/or wiper manually after a large number of wiper actions. However, by lowering the angle below 8°, the problem is mitigated or can even be completely prevented, depending i.a. on the material of which the guiding track and/or the wiper is made, such that such manual cleanings can take care at a substantially lower frequency or can even be completely unnecessary.

Therefore, the object of this embodiment of the invention was to devise an improved system for gathering excreta of production animals. This object was met by devising a system wherein the guiding track (which preferably is an in essence flat guiding track) is slopingly positioned under an angle of less than 8° with the horizontal, to allow the urine to flow under the influence of gravity in a first direction corresponding to the slope of the guiding track towards a first container, and in that the system further comprises a wiper to wipe the faeces in a second direction differing from the first direction towards a second container. The optional cleaning water may be transported separately to a third container using the above technology or any other known technology.

The invention is further embodied in the following preferred systems of the system as introduced directly here above:
A system as described here above, characterised in that the guiding track is positioned under an angle of 5° or smaller with respect to the horizontal. Preferably the guiding track is positioned under an angle of 0.1 to 3° with respect to the horizontal. Even more preferably the guiding track is positioned under an angle of 0.2 to 1° with respect to the horizontal.

Any of the systems as described here above, characterised in that the guiding track has a surface made from a synthetic plastic material. Preferably the synthetic plastic material is a thermoplastic material.. More preferably the synthetic plastic material is a non-polar polyolefin. Even more preferably, the synthetic plastic material is a polyethylene or a polypropylene. Most preferably the synthetic plastic material is chosen from the group consisting of LLDPE, UHMWPE and PP.

Any of the systems as described here above, characterised in that the wiper is made from a rubber material. Preferably the rubber material is a non porous material. More preferably the rubber material is a non filled material. Even more preferably the rubber material is an EPDM rubber.

Any of the systems as described here above, characterised in that the system comprises a means to cool the guiding track.

Any of the systems as described here above, characterised in that the system comprises a means to wet the guiding track. Advantageously, the liquid to wet the guiding track is an aqueous liquid, which may comprise one or more substances that suppress the activity of the urease (so called urease inhibitors). In the latter embodiment, even in the short time the faeces and urine are in contact with each other in the novel system, any activity of the urease that results in unwanted products such as ammonia may be even further suppressed.

Any of the systems as described here above, characterised in that the perforated area of the floor is a heightened sub area of the floor.

Any of the systems as described here above, characterised in that the perforated area of the floor comprises a longitudinal beam that protrudes from the perforated area.

Any of the systems as described here above, characterised in that the system comprises a means to cool the floor.

Any of the systems as described here above, characterised in that the floor is non porous.

The invention will now be further explained using the following non limiting examples.

### EXAMPLES

Figure 1 is a schematic side view of a system according to the invention.
Figure 2 is a schematic side view of a stable floor that can be used with a system according to the invention.

### Figure 1

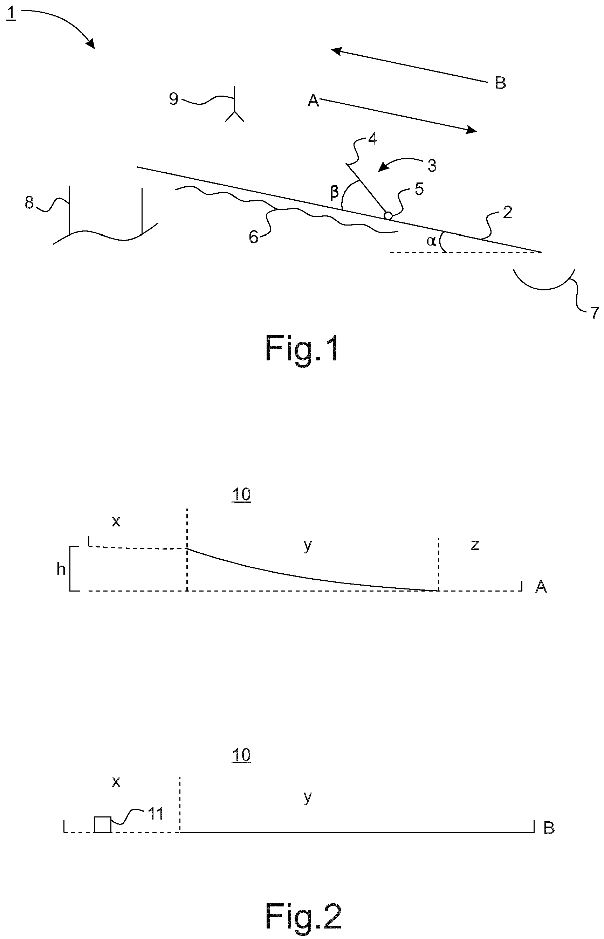

Figure 1 is a schematic side view of the most essential parts of a system 1 according to the invention, i.e. the guiding track 2 and various corresponding parts for guiding animal excreta comprising faeces and urine to their respective containers. The stable of the animals themselves is not shown in figure 1. However, this can be any common set-up, as known for example for many production animals including pigs. The guiding track 2 is situated underneath the area where the animal excreta pass the stable floor (area X in Figure 2).

The guiding track 2 is an in essence flat guiding track (meaning that it is macroscopically flat, not being convex or concave, in particular not even having convex or concave sub-areas such as waves or other unevenness, but not excluding a surface roughness e.g. as a result of sanding) for guiding the excreta (not depicted) away from the stable floor above the guiding track. In this embodiment the flat guiding track is a self-supporting 3 mm thick plate made of polypropylene and thus has an polyproylene volume and top-surface and is slopingly positioned at an angle α of 0.5° with the horizontal. This means that any urine that reaches the track 2 will slowly flow towards gutter 7 as indicated by arrow A under the influence of gravity. The gutter ultimate leads the urine to a container (not shown). The system further comprises a wiper 3 (which is part of a - not depicted - robot that can autonomously cross the guiding track) to wipe any faeces in the opposition direction, indicated by arrow B, to a second container of which entrance port 8 is depicted in Figure 1. The wiper in this case consists of a stainless steel plate 3 having a width of about 1070 mm, and a height of about 150 mm, provided at its tip with an EPDM wiper strip 5 having a height of about 20 mm. The wiper is positioned under a forward angle ß (70°) with respect to the wiping direction B. If desired, depending on the configuration with respect to the stable floor, the wiper may also be angled in a direction essentially perpendicular to the shown side view of figure 1.

The guiding track 2 is provided with cooling means 6, tubes through which a cooling medium is transported. Also, a sprinkler 9 is foreseen to sprinkle water on the track if the track becomes too dry. This could be the case for example when the period in between wiping becomes quite long, or when a stable is not filled with animals. As an alternative for such a sprinkler one could also opt for more regular wiping actions.

The wiper 3 is pulled along the guiding track 2 using cables (not shown) wherein the wiper is supported slidingly in U-profiles at both ends. This way a reliable wiping action can be achieved even when length as long as 10-20 meters or higher are used.

It is noted that in the system of the invention multiple wipers can be used on one track, and/or any wiper can have a dual function, e.g. wiping solid excreta when wiping in a first direction, while wiping any remaining urine when wiping directly thereafter in opposite direction. For this, the wiping action can be adjusted if necessary, for example by adjusting the forward angle, pressure, speed etc.

### Figure 2

Figure 2, composed of sub-figures A and B, gives schematic side views of stable floors that can be used with a system according to the invention. The two types of floors have in common that the overall system comprises a confined space for keeping the production animals, wherein the floor 10 (composed of areas X, Y and optionally Z) functions to supporting the animals, and wherein the floor comprises a perforated area X to let excreta of the animals pass through the floor. In an alternative embodiment, for example for use with larger animals than pigs, the area X may be devised such that it is a mere hole, and the animal is only able to stand and walk on area Y (and Z if applicable), and excrete directly into hole X.

Figure 2A schematically depicts an embodiment wherein the perforated area X of the floor is a heightened sub area of the floor. Its height h in this embodiment is about 25 cm above the lowest part Z of the floor. In between part X and Z there is an area Y that slopes between these two areas. A typical length for area X is 120 cm for a pig stable, wherein Y has a length of 315 cm and Z a length of 75 cm. The width of the stable is typically 255 cm. It was found that by proving the perforated area as a heightened area, in particular pigs, will preferentially use this area as a toilet area, instead of a lying and walking area. This may help to prevent or at least diminish the amount of excreta, and the concomitant disadvantages, on the floor of the main stable (areas Y and Z) and induce maximum amount of excreta to arrive at the guiding track (underneath area X, not depicted in Figure 2A).

In figure 2B an alternative arrangement is depicted. In this arrangement the perforated area X comprises a longitudinal beam 11 (having a length being the same as the width of the stable, i.e. 255 cm), having a width and height of 10 cm, that protrudes from the perforated area X. Beam 11 has more or less the same effect as heightening the perforated area as shown in Figure 2A. By proving a beam 11 on the area X, the area is less attractive for lying down and walking. At the same time, the beam was found to be an attractive support for pigs to stand against when producing faeces. So the provision of such a beam may increase the amount of excreta ultimately arriving at the guiding track (underneath area X, not depicted in Figure 2B).

Scientific research of Wageningen University done in 2019-2020, using models for animal stables, has shown that the invention provides the possibility to reach the following advantageous results:
- The emission of NH₃ can be reduced by 77% with respect a common reference stable for keeping pigs. The reduction at this number would be possible by applying 1) a continuous drainage of urine to a closed tank and regular removal of faeces by the wiper system, 2) a mesh flooring and 3) cooling of the floor during summer time. Using a so called "urease-inhibitor" (Dutch: urease-remmer or EOW), which is sprayed one time per day, the emission can be further reduced to 83%.
- Odour emission is expected to be reduced by 65% (i.e. 65% less emission) with respect to the same reference stable.
- Emission of methane is expected to be reduced by 90% with respect to the same reference stable, assuming long-time storage of the manure in the reference stable.
- Emission of fine dust particles is expected to be reduced by 25% with respect to the same reference stable.

## Claims

1. A system for gathering excreta of production animals, the system comprising a confined space for keeping the production animals, the space comprising a floor for supporting the animals, wherein the floor comprises a perforated area to let the excreta of the animals pass through the floor onto a self-supporting guiding track for guiding the excreta away from the confined space, the system further comprising a wiper to wipe remains of the excreta of the guiding track, **characterised in that** the volume of the self-supporting guiding track, including the surface of the guiding track, is made from a synthetic plastic material chosen from the group consisting of non-polar polyolefins and polyepoxides, and **in that** the wiper has a surface made from a non-porous, non-filled rubber.

2. A system according to claim 1, **characterised in that** the synthetic plastic material is chosen from the group consisting of a polyethylene and a polypropylene and the rubber is an EPDM rubber.

3. A system according to claim 2, **characterised in that** the synthetic plastic material is chosen from the group consisting of LLDPE, UHMWPE and PP.

4. A system according to any of the preceding claims, **characterised in that** the wiper is in essence completely made from the rubber.

5. A system according to any of the preceding claims, **characterised in that** the wiper is positioned under a forward angle with respect to the wiping direction between 60 and 90°.

6. A system according to claim 5, **characterised in that** the wiper is positioned under a forward angle with respect to the wiping direction of about 70°.

7. A system according to any of the preceding claims, **characterised in that** the guiding track is slopingly positioned under an angle of less than 20° with the horizontal to allow the urine to flow under the influence of gravity in a first direction corresponding to the slope of the guiding track towards a first container, and **in that** the wiper is positioned to wipe the faeces in a second direction towards a second container, which second direction differs from the first direction.

8. A system according to claim 7, **characterised in that** the guiding track is positioned under an angle of less than 8° with respect to the horizontal.

9. A system according to claim 8, **characterised in that** the guiding track is positioned under an angle of 0.1 to 5° with respect to the horizontal.

10. A system according to claim 9, **characterised in that** the guiding track is positioned under an angle of 0.2 to 2° with respect to the horizontal.

11. A system according to any of the preceding claims, **characterised in that** the system comprises a means to cool the guiding track.

12. A system according to any of the preceding claims, **characterised in that** the system comprises a means to wet the guiding track.

13. A system according to any of the preceding claims, **characterised in that** the perforated area of the floor is a heightened sub area of the floor.

14. A system according to any of the preceding claims, **characterised in that** the perforated area of the floor comprises a longitudinal beam that protrudes from the perforated area.

15. A system according to any of the preceding claims, **characterised in that** the system comprises a means to cool the floor.

16. A system according to any of the preceding claims, **characterised in that** the floor is non porous.
